(19) Europäisches Patentamt
European Patent Office
Office européen des brevets

(11) **EP 4 559 747 A1**

(12) **EUROPEAN PATENT APPLICATION**

(43) Date of publication:
**28.05.2025 Bulletin 2025/22**

(51) International Patent Classification (IPC):
**B60P 1/04** *(2006.01)*

(21) Application number: **23211705.1**

(52) Cooperative Patent Classification (CPC):
**B60P 1/045**

(22) Date of filing: **23.11.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• **JONASSON, Mats**
  **433 49 PARTILLE (SE)**
• **BALIGA, Nikhil**
  **413 02 GÖTEBORG (SE)**
• **SÖDER, Richard**
  **449 36 NÖDINGE (SE)**
• **ARIKERE, Adithya**
  **422 50 GÖTEBORG (SE)**

(74) Representative: **Ström & Gulliksson AB**
**P.O. Box 4188**
**203 13 Malmö (SE)**

(54) **ROLLOVER MITIGATION DURING TIPPING**

(57)    A computer-implemented method is disclosed for a vehicle comprising a vehicle body and a vehicle subsystem for load carrying, wherein the vehicle subsystem for load carrying is configured to be increasingly tilted in relation to the vehicle body for load discharge during a tipping operation of the vehicle.

The method comprises (during the tipping operation) acquiring respective lateral load balance metrics for two different locations along the longitudinal dimension of the vehicle, dynamically determining a difference between the respective lateral load balance metrics, and causing a tipping interruptive action to be performed based on an increase rate of the difference.

In some examples, causing the tipping interruptive action is performed responsive to a function of the increase rate exceeding a corresponding threshold value.

Corresponding computer system, vehicle, computer program product, and nontransitory computer-readable storage medium are also disclosed.

FIG. 3

**EP 4 559 747 A1**

# Description

## TECHNICAL FIELD

The disclosure relates generally to vehicle control. In particular aspects, the disclosure relates to rollover mitigation during tipping. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

It is common that a vehicle configured for transporting load is also configured for unloading by performing a tipping operation, whereby gravitational force is utilized to cause the load to slide off the vehicle.

Such unloading approaches are particularly suitable for (preferably non-delicate) loads that may be viewed as a continuous mass rather than individual items (e.g., sand, beets, debris, etc.). Such loads may be referred to as bulk loads and the corresponding unloading may be referred to as bulk discharge.

To this end, a vehicle may comprise a vehicle body and a vehicle subsystem for load carrying (e.g., including a tipper), wherein the vehicle subsystem for load carrying is configured to be increasingly tilted in relation to the vehicle body for load discharge during a tipping operation.

A problem with tipping operations is that rollover of the vehicle may occur. Rollover accidents are typically very expensive as they may cause irreversible damage to the vehicle.

Therefore, there is a need for approaches of mitigation of rollover during tipping operations (e.g., avoiding rollover, decreasing the probability of rollover, etc.).

## SUMMARY

Various aspects may aim to solve, mitigate, alleviate, or eliminate at least some of the above or other disadvantages.

According to a first aspect of the disclosure, a computer system for a vehicle is provided, wherein the vehicle comprises a vehicle body and a vehicle subsystem for load carrying, and wherein the vehicle subsystem for load carrying is configured to be increasingly tilted in relation to the vehicle body for load discharge during a tipping operation of the vehicle. The computer system comprises processing circuitry configured to, during the tipping operation, acquire respective lateral load balance metrics for two different locations along the longitudinal dimension of the vehicle, dynamically determine a difference between the respective lateral load balance metrics, and cause a tipping interruptive action to be performed based on an increase rate of the difference.

The first aspect of the disclosure may seek to mitigate (e.g., avoid or decrease the probability of) rollover during the tipping operation. A technical benefit may include improved vehicle behavior (e.g., increased safety) during tipping operations.

Particularly, since the tipping interruptive action can be triggered in relation to the increase rate of the lateral load balance metric difference between two different locations along the longitudinal dimension of the vehicle, a technical benefit may include that unnecessary tipping interruptive actions may be avoided (e.g., when there is a relatively large - but still manageable - roll angle or lateral load balance metric difference) and/or that potential rollover situations are not overlooked (e.g., when there is a relatively small - but quickly increasing - roll angle or lateral load balance metric difference).

Optionally in some examples, including in at least one preferred example, the processing circuitry may be configured to cause the tipping interruptive action responsive to a value of a function of the increase rate exceeding a corresponding threshold value. For example, the processing circuitry may be configured to cause the tipping interruptive action responsive to the increase rate exceeding a threshold value for the increase rate and/or responsive to a weighted combination of the difference and the increase rate exceeding a threshold value for the weighted combination.

Optionally in some examples, including in at least one preferred example, the tipping interruptive action may comprise inhibiting the tipping operation. A technical benefit may include that rollover may be effectively avoided by immediately stopping the progress of the tipping operation (and possibly even reversing the tilting of the vehicle subsystem for load carrying).

Optionally in some examples, including in at least one preferred example, the tipping interruptive action may comprise issuing a warning message via an operator interface. A technical benefit may include that rollover control may be delegated to an operator of the vehicle, e.g., allowing the operator to decide whether or not to stop the progress of the tipping operation (and possibly reverse the tilting of the vehicle subsystem for load carrying).

Optionally in some examples, including in at least one preferred example, each of the two different locations may be a respective wheel axle location. A technical benefit may include that each of the lateral load balance metrics can be conveniently determined based on parameters (e.g., load or other suitable force) measurable at different points of the wheel axle (e.g., end points of the wheel axle, suspension points of the wheel axle, points where the wheel axle is operatively connected to the chassis of the vehicle body, points where the wheel axle is operatively connected to the wheels, etc.).

Optionally in some examples, including in at least one preferred example, the lateral load balance metric may comprise a load disparity between two laterally spaced points along the wheel axle.

Optionally in some examples, including in at least one preferred example, the lateral load balance metric for a considered location along the longitudinal dimension of the vehicle may comprise a roll angle at the considered location. A technical benefit may include that each of the lateral load balance metrics can be conveniently determined based on data from one or more sensors associated with the considered location (e.g., sensor(s) configured to perform measurements for/at the location). Examples of suitable sensors include acceleration sensors, gyroscopic sensors, and ground distance sensors.

Optionally in some examples, including in at least one preferred example, the processing circuitry may be further configured to determine the lateral load balance metric. A technical benefit may include that suitable lateral load balance metrics can be acquired when not otherwise available from other systems of the vehicle.

Optionally in some examples, including in at least one preferred example, the lateral load balance metric may be determined based on one or more of: acceleration data from an acceleration sensor associated with the considered location, gyroscopic data from a gyroscopic sensor associated with the considered location, suspension data indicative of a difference in vertical load between two laterally spaced points associated with the considered location, and ground distance sensor data indicative of a difference in distance to ground between two laterally spaced points associated with the considered location. A technical benefit may include flexibility how the lateral load balance metric can be determined. For example, data from sensors that are already available on the vehicle for other purposes may be utilized for determination of the lateral load balance metrics. Thereby, the rollover mitigation may be implemented without (or with a small amount of) additional hardware.

According to a second aspect of the disclosure, a vehicle is provided. The vehicle comprises a vehicle body and a vehicle subsystem for load carrying, wherein the vehicle subsystem for load carrying is configured to be increasingly tilted in relation to the vehicle body for load discharge during a tipping operation of the vehicle. The vehicle further comprises the computer system of the first aspect. The second aspect of the disclosure may seek to provide a vehicle with improved vehicle behavior during tipping operations.

According to a third aspect of the disclosure, a computer-implemented method is provided for a vehicle comprising a vehicle body and a vehicle subsystem for load carrying, wherein the vehicle subsystem for load carrying is configured to be increasingly tilted in relation to the vehicle body for load discharge during a tipping operation of the vehicle. The method comprises - during the tipping operation - acquiring (by processing circuitry of a computer system) respective lateral load balance metrics for two different locations along the longitudinal dimension of the vehicle, dynamically determining (by the processing circuitry) a difference between the respective lateral load balance metrics, and causing (by the processing circuitry) a tipping interruptive action to be performed based on an increase rate of the difference.

The third aspect of the disclosure may seek to mitigate (e.g., avoid or decrease the probability of) rollover during the tipping operation. A technical benefit may include improved vehicle behavior (e.g., increased safety) during tipping operations.

Particularly, since the tipping interruptive action can be triggered in relation to the increase rate of the lateral load balance metric difference between two different locations along the longitudinal dimension of the vehicle, a technical benefit may include that unnecessary tipping interruptive actions may be avoided (e.g., when there is a relatively large - but still manageable - roll angle or lateral load balance metric difference) and/or that potential rollover situations are not overlooked (e.g., when there is a relatively small - but quickly increasing - roll angle or lateral load balance metric difference).

According to a fourth aspect of the disclosure, a computer program product is provided, comprising program code for performing the method of the third aspect when executed by processing circuitry.

According to a fifth aspect of the disclosure, a non-transitory computer-readable storage medium is provided, comprising instructions, which - when executed by processing circuitry - cause the processing circuitry to perform the method of the third aspect.

The fourth and/or fifth aspect of the disclosure may seek to convey program code for improving vehicle behavior during tipping operations. A technical benefit may include that new vehicles and/or legacy vehicles may be conveniently configured, by software installation/update, to acquire respective lateral load balance metrics for two different locations along the longitudinal dimension of the vehicle, dynamically determine a difference between the respective lateral load balance metrics, and cause a tipping interruptive action to be performed based on an increase rate of the difference.

The disclosed aspects, examples (including any preferred examples), and/or accompanying claims may be suitably combined with each other as would be apparent to anyone of ordinary skill in the art.

Some additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

> **FIG. 1** is a schematic drawing illustrating a vehicle according to some examples.
> **FIG. 2** is a schematic drawing illustrating a vehicle during a tipping operation according to some examples.
> **FIG. 3** is a flowchart illustrating a method according to some examples.
> **FIG. 4A** is a schematic drawing illustrating two different locations along the longitudinal dimension of a vehicle according to some examples.
> **FIG. 4B** is a schematic drawing illustrating a cross section of a vehicle according to some examples.
> **FIG. 5** is a schematic diagram illustrating a computer system for implementing examples disclosed herein, according to some examples.
> **FIG. 6** is a schematic drawing illustrating a computer program product, in the form of a non-transitory computer-readable storage medium, according to some examples.
> **FIG. 7** is a schematic block diagram of a control unit according to some examples.

**DETAILED DESCRIPTION**

The detailed description set forth below provides information and examples of the disclosed technology with sufficient detail to enable those skilled in the art to practice the disclosure.

As already mentioned, a problem that may be experienced during a tipping operation performed by a vehicle is that rollover of the vehicle may occur. It should be noted that the approaches suggested herein are applicable to any situation where it is desired to avoid rollover during a tipping operation, even if some specific scenarios are used for exemplification.

Typically, rollover at standstill is due to a straight line, which follows the direction of the gravitation force through the center of gravity (CoG) of the vehicle, not passing through a lateral range extending from the sideways extreme ground-touching points of the vehicle (e.g., left and right wheels).

Example situations that may lead to rollover at standstill include uneven (non-horizontal) ground, large distance between ground and CoG of the vehicle, and a CoG which is not laterally centered in relation to the vehicle.

A tipping operation may cause the distance between ground and CoG to increase, especially if some of the load remains at the raised end of the vehicle subsystem for load carrying at relatively high tilting angles. Alternatively or additionally, a tipping operation may cause the CoG not to be laterally centered in relation to the vehicle, especially if the unloading is asymmetrical (e.g., more of the load remains on one side of the vehicle subsystem for load carrying than on the other side). For example, sticky load (e.g., moist sand) can increase the risk of either or both of these situations.

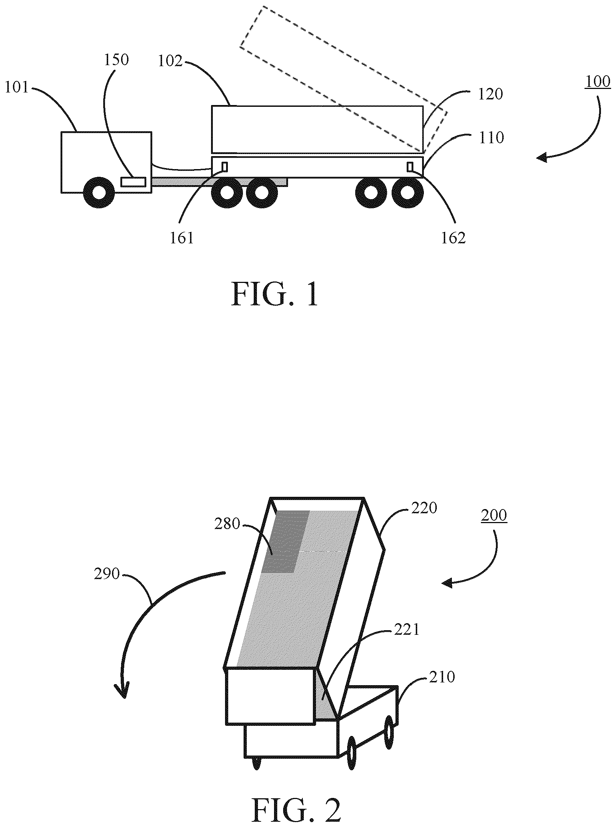

**FIG. 1** schematically illustrates an example vehicle **100** for cargo transport where the techniques disclosed herein can be advantageously applied. The vehicle **100** comprises a truck/tractor/towing unit **101** configured to tow one or more trailer unit(s) **102** in a known manner. It should be noted that - even though the vehicle **100** is used as an example - the approaches suggested herein may be equally applicable to load-transporting vehicles consisting of a single vehicle unit (i.e., tractor and trailer functions integrated into a single unit).

The tractor unit **101** and/or any of the trailer unit(s) **102** may comprise a vehicle control unit (VCU) configured to perform various control functions related to the vehicle, such as vehicle motion management (VMM).

In the example of **FIG. 1,** the trailer unit **102** of the vehicle **100** comprises a vehicle body **110** and a vehicle subsystem **120** for load carrying (i.e., a load-carrying vehicle subsystem). The vehicle subsystem **120** for load carrying is configured to be increasingly tilted in relation to the vehicle body **110** for load discharge during a tipping operation of the vehicle **100** in a known manner. The tilting of the vehicle subsystem **120** for load carrying is schematically illustrated in dashed in the example of **FIG. 1.**

The tractor unit **101** and/or the trailer unit **102** comprises processing circuitry forming part of a computer system for controlling the vehicle. In particular, the processing circuitry may be configured to monitor and/or control the tipping operation. In the example of **FIG. 1,** the processing circuitry is represented by a control unit **150,** which may be comprised in, or separate from, the VCU.

In various examples, the vehicle body **110** and/or the vehicle subsystem **120** for load carrying may comprise one or more sensors **161, 162** configured to provide information to the control unit **150,** wherein the information is associated with respective lateral load balance metric(s) for location(s) along the longitudinal dimension of the vehicle **100.** For example, the information provided by a sensor **161, 162** to the control unit **150** may be data from which the lateral load balance metric of a location can be determined, or may be an indication of the lateral load balance metric itself.

The information may be provided directly from the sensor(s) **161, 162** to the control unit **150,** or may be provided via some other functional and/or structural unit. For example, the sensor(s) **161, 162** may provide measurement data to a determination module (not shown) configured to determine the lateral load balance metric(s), and the determination module may be configured to provide the determined lateral load balance metric(s) to the control unit **150.**

**FIG. 2** schematically illustrates a vehicle **200** during a tipping operation. For example, **FIG. 2** may be seen as a schematic representation of the trailer unit **102** or the vehicle **100** of **FIG. 1.**

The vehicle **200** comprises a vehicle body **210** and a vehicle subsystem **220** for load carrying. The vehicle subsystem **220** for load carrying is configured to be increasingly tilted in relation to the vehicle body **210** for load discharge during a tipping operation of the vehicle **200** in a known manner. In the example of **FIG. 2,** the vehicle subsystem **220** for load carrying is shown in a tilted position, in which gravitational force is utilized to cause the load (represented in grey) to slide off the vehicle **200** through an end **221** of the vehicle subsystem **220** for load carrying.

The distance between ground and the CoG of the vehicle **200** potentially increases with the tilting of the vehicle subsystem **220** for load carrying in relation to the vehicle body **210.** This is particularly possible if the load does not easily slide of the vehicle subsystem **220** for load carrying, so that some of the load **280** remains at the raised end of the vehicle subsystem **220** for load carrying even at relatively high tilting.

Alternatively or additionally, if the load dispatch is not laterally symmetric (so that - at some moment in time during dispatch - more load remains in one lateral half of the vehicle subsystem **220** for load carrying than in the other lateral half; compare with **280**), the CoG of the vehicle **200** is potentially not laterally centered during the tipping operation.

Thus, the tipping operation may increase the risk of rollover **290** as explained above, especially if the ground is not completely horizontal. Approaches suggested herein aim to mitigate (e.g., avoid and/or decrease the probability of) rollover in these and/or other situations.

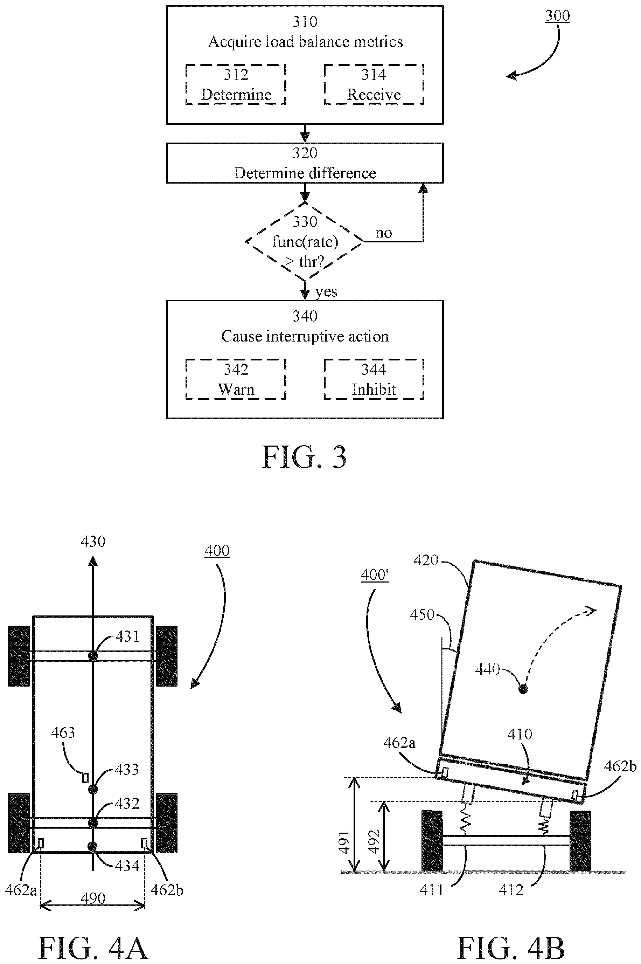

**FIG. 3** illustrates an example method **300** suitable for mitigation of rollover. The method **300** is a computer-implemented method for a vehicle comprising a vehicle body and a vehicle subsystem for load carrying, wherein the vehicle subsystem for load carrying is configured to be increasingly tilted in relation to the vehicle body for load discharge during a tipping operation of the vehicle. The method **300** is performed during the tipping operation.

For example, the method **300** may be applied in relation to any of the vehicles **100, 200** illustrated in **FIG. 1** and **FIG. 2.** In some examples, the method **300** is performed by processing circuitry forming part of a computer system for monitoring and/or controlling the tipping operation. For example, the method **300** may be performed by the control unit **150** illustrated in **FIG. 1.**

As illustrated by step **310,** respective lateral load balance metrics are acquired for two (or more) different locations along the longitudinal dimension of the vehicle.

For example, the acquisition of a lateral load balance metric may comprise receiving information (e.g., measurement data) from which the lateral load balance metric can be determined, and determining the lateral load balance metric as illustrated by optional sub-step **312.** Alternatively, the acquisition of a lateral load balance metric may comprise receiving the lateral load balance metric (or an indication thereof) as illustrated by optional sub-step **314.**

Generally, the load balance metric for a location along the longitudinal dimension of the vehicle may be any suitable load balance metric. For example, the load balance metric may comprise a roll angle at the location. Alternatively or additionally, the load balance metric may comprise a load disparity between two laterally spaced points at the (longitudinal) location.

As illustrated by step **320,** a difference between the respective lateral load balance metrics is dynamically determined. Typically, but not necessarily, the difference may be represented in absolute values.

The difference being dynamically determined may be seen as tracking the difference value over time during the tipping operation, which enables monitoring of how the difference changes (e.g., increases/decreases) during the tipping operation.

Generally, the dynamically determined difference aims to indicate rollover risk. For example, if there is a rollover risk due to increasing distance between ground and the CoG of the vehicle and/or due to the load dispatch being laterally asymmetric, the lateral load is typically increasingly less balanced at one end of the vehicle (e.g., the rear end) than at the other end of the vehicle (e.g., the front end) during the tipping operation; which can be indicated by increasing difference between the respective load balance metrics of the different locations along the longitudinal dimension of the vehicle.

When lateral load balance metrics are acquired for more than two different locations along the longitudinal dimension of the vehicle, the dynamical determined difference may refer to a collection of differences, wherein each difference is determined for two of the locations. For example, when there are three locations, two or more difference values may be determined; selected among a first difference determined between the front-most and the middle location, a second difference determined between the middle and the rear-most location, and a third difference determined between the front-most and the rear-most location.

As illustrated by step **340,** a tipping interruptive action is caused to be performed based on an increase rate of the difference. For example, causing the tipping interruptive action may comprise performing the tipping interruptive action or sending a control signal to some other functional and/or structural unit configured to perform the tipping interruptive action responsive to receiving the control signal.

Generally, the tipping interruptive action may be any suitable tipping interruptive action. For example, the tipping interruptive action may comprise issuing a warning message via an operator interface as illustrated by optional sub-step **342.** Alternatively or additionally, the tipping interruptive action may comprise inhibiting (e.g., halting, stopping, or slowing down) the tipping operation as illustrated by optional sub-step **344.**

The warning message may be configured to enable an operator of the vehicle to evaluate the situation in relation to the rollover risk. For example, if a temporary support system is in place for hindering rollover (e.g., struts extending laterally from the vehicle), the operator may decide that no further measures need to be taken despite the warning message.

Alternatively or additionally, the warning message may be configured to prompt an operator of the vehicle to take action to prevent rollover. For example, the warning message may prompt (e.g., cause) the operator to halt, stop, or slow down the tipping operation, and/or to reposition the vehicle.

The operator interface may be any suitable man/machine interface (e.g., a visual interface, an audio interface, a haptic interface, etc.). The operator interface may be implemented within the vehicle (e.g., a dashboard, etc.) or within a separate device (e.g., a remote control unit, a smartphone, etc.).

Generally, the causing of the tipping interruptive action to be performed may be based on the increase rate of the difference in any suitable way. For example, causing the tipping interruptive action may be performed responsive to a value of a function ("func") of the increase rate ("rate") exceeding a corresponding threshold value ("thr") as illustrated by optional step **330.** The increase rate may be seen as a predictor of a warp event causing rollover (e.g., as discussed below in relation to **FIG. 4B**).

According to some examples, the function is the identity function; i.e., causing the tipping interruptive action is performed responsive to the increase rate exceeding a threshold value for the increase rate.

According to some examples, causing the tipping interruptive action is performed responsive to a weighted combination of the difference and the increase rate exceeding a threshold value for the weighted combination. Thus, the function could be expressed as $f(\delta) = k\delta + (1 - k)\delta'$, where $\delta$ represents the difference, its derivative $\delta'$ represents the increase rate, and $0 \leq k < 1$ represents a weighting factor.

When lateral load balance metrics are acquired for more than two different locations along the longitudinal dimension of the vehicle (i.e., when there are two or more difference values), the causing of the tipping interruptive action to be performed may be based on the increase rates of the differences in any suitable way. For example, the difference with largest value, or the difference with largest increase value, may be selected and the increase rate of that selected difference may be used to trigger the tipping interruptive action to be performed as described above.

**FIG. 4A** schematically illustrates a top view cross section of an example vehicle **400,** where the longitudinal dimension of the vehicle **400** is represented by the coordinate axis **430.** For example, **FIG. 4A** may be seen as a schematic representation of the vehicle **200** of **FIG. 2,** and/or of the trailer unit **102** or the vehicle **100** of **FIG. 1.**

Four different locations **431, 432, 433, 434** along the longitudinal dimension of the vehicle **400** are shown to exemplify that a location along the longitudinal dimension of the vehicle **400** may be the location of a wheel axle (as illustrated by **431** and **432**) or any other suitable location (as illustrated by **433** and **434**).

In some examples, each of the two different locations used is a respective wheel axle location (compare with **431** and **432**). For example, one of the two locations may be a wheel axle location **431** on the front half of the vehicle **400** (e.g., a front-most wheel axle) and the other one of the two locations may be a wheel axle location **432** on the rear half of the vehicle **400** (e.g., a rear-most wheel axle).

In some examples, at least one of the locations used is a location other than a wheel axle location (compare with **433** and **434**). Generally, any suitable location along the longitudinal dimension of the vehicle **400** may be used. For example, a location may be considered as suitable when a sensor **462a, 462b, 463** is configured to perform measurements from which a lateral load balance metric of the location can be determined (compare with sensors **161, 162** of **FIG. 1**).

Typically, but not necessarily, the two different locations used have a relatively long distance between them (e.g., to entail relatively large difference values). Alternatively or additionally, one of the two locations may be on the front half of the vehicle **400** (e.g., close to a front end of the vehicle) and the other one of the two locations may be on the rear half of the vehicle **400** (e.g., close to a rear end of the vehicle).

**FIG. 4B** schematically illustrates a rear view cross section of a vehicle **400'** according to some examples. The vehicle **400'** comprises a vehicle body **410** and a vehicle subsystem **420** for load carrying. The vehicle subsystem **420** for load carrying is configured to be increasingly tilted in relation to the vehicle body **410** for load discharge during a tipping operation of the vehicle **400'.** For example, **FIG. 4B** may be seen as a schematic representation of the vehicle **200** of **FIG. 2,** and/or of the trailer unit **102** or the vehicle **100** of **FIG. 1,** and/or of the vehicle **400** of **FIG. 4A.**

The vehicle **400'** is shown in a position with nonzero roll angle **450.** For example, such a position may be caused by the CoG **440** being displaced as illustrated by the dashed line (e.g., during a tipping operation as exemplified above). If the roll angle **450** becomes large enough, a rollover may occur.

The roll angle of a single longitudinal location is typically a rather blunt variable for mitigation of rollover. For example, during a tipping operation, the roll angle may remain relatively small at some longitudinal locations (e.g., close to the front end of the vehicle) until the rollover suddenly occurs. On the other hand, during a tipping operation, the roll angle may become relatively large at some longitudinal locations (e.g., close to the rear end of the vehicle) without any rollover taking place.

Therefore, it may be beneficial to consider the roll angle (or another suitable lateral load balance metric) for two different locations along the longitudinal direction of the vehicle.

During a tipping operation, the increase rate of the difference between roll angles (or other suitable lateral load balance metrics) for two different locations along the longitudinal direction of the vehicle provides a particularly useful parameter for mitigation of rollover. For example, if the roll angle of either, or both, of the two locations (or the difference between the roll angles of the two locations) is relatively large, but stable, rollover might not be imminent. On the other hand, the roll angle of both of the two locations (and/or the difference between the roll angles of the two locations) may be relatively small, but rollover might still be imminent which is manifested in a rapid increase rate.

Thus, a relatively large increase rate of the difference typically indicates that rollover is about to occur, and using such an indicator can entail earlier and/or more accurate detection of potentially upcoming rollover than other approaches.

To further exemplify some benefits of the suggested approach, it may be noted that the construction of a tipper is usually such that a hydraulic tipper arm primarily (or only) supports vertical and longitudinal forces. Consequently, lateral and/or torsional forces are not absorbed by the tipper arm, but are typically transmitted primarily through the hinge mechanism of the tipper (at the rear of the vehicle), which may result in lateral load imbalance that need to be supported by the rear axle. This, in turn, may cause a roll angle to be induced mainly at the rear end of the chassis (warp event). The difference in roll angle between the front end and rear end of the chassis, as well as how it changes over time during the tipping operation, may be monitored by application of the approaches suggested herein. As already noted, the difference in roll angle between two different locations along the longitudinal dimension of the vehicle is of particular interest. If the two locations both have a significant - but same or similar - roll angle, it is typically not due to uneven lateral load not being supported by the tipper arm, but may be due to road banking and might not be indicating a rollover risk. As also noted already, the rate of change (increase rate) of the difference between roll angles of the two locations is a strong and early indicator of imminent rollover (damping in the suspension and chassis typically causes the roll angle to build gradually).

When a wheel axle location is used as location along the longitudinal dimension of the vehicle, the lateral load balance metric may comprise a load disparity between two laterally spaced points along the wheel axle. For example, the two laterally spaced points may be suspension points of the wheel axle (as illustrated by **411** and **412** in **FIG. 4B**), end points of the wheel axle, the wheels of the wheel axle, or any other points where load measurements can be performed (or load data can be otherwise acquired).

More generally, for any location along the longitudinal dimension of the vehicle, the lateral load balance metric may comprise a load disparity between two laterally spaced points associated with (e.g., at) the considered location. For example, the two laterally spaced points may be suspension points between different vehicle parts (e.g., the vehicle body and the vehicle subsystem for load carrying), or any other points where load measurements can be performed (or load data can be otherwise acquired).

Thus, in some examples, the load balance metric is determined based on suspension data indicative of a difference in vertical load between two laterally spaced points associated with the considered location. Referring to the example of **FIG. 4B**, a respective vertical load may be acquired (e.g., measured) for each of the points **411** and **412** and the load balance metric may be determined as the difference between the respective vertical loads of the points **411** and **412**.

When the lateral load balance metric for a considered location along the longitudinal dimension of the vehicle comprises a roll angle (or some parameter associated with the roll angle) at the considered location, it may be determined in any suitable way.

For example, the roll angle may be determined based on acceleration data from an acceleration sensor associated with (e.g., at) the considered location (compare with sensors **161** and **162** of **FIG. 1** and sensor **463** of **FIG. 4A**). The acceleration sensor may be any suitable sensor for providing acceleration measurements (e.g., an inertial measurement unit - IMU). In some examples, if measurement data for a location indicates the lateral acceleration $a_y$, the roll angle $\theta_x$ may be approximated (at least for relatively small roll angles) according to $\theta_x \approx a_y/g$, where g represents the gravitational constant. For relatively larger roll angles, more accurate values of the roll angle may be achieved by considering the longitudinal acceleration $a_x$ and the vertical acceleration $a_z$ in addition to the lateral acceleration $a_y$, and/or by using precise trigonometry instead of approximations. If the vehicle is at standstill, the following equation system may apply (with approximations for relatively small roll angles):

$$a_x = -g \cdot \sin(\theta_y) \approx -g \cdot \theta_y$$

$$a_y = +g \cdot \sin(\theta_x) \cdot \cos(\theta_y) \approx +g \cdot \theta_x$$

$$a_z = +g \cdot \cos(\theta_x) \cdot \sin(\theta_y) \approx +g \cdot \theta_y$$

where $\theta_y$ is pitchangle. If the vehicle is not at standstill, other motion terms need to be considered as well (at least if the velocity effect is not negligible).

Alternatively or additionally, the roll angle may be determined based on gyroscopic data from a gyroscopic sensor associated with (e.g., at) the considered location (compare with sensors **161** and **162** of **FIG. 1** and sensor **463** of **FIG. 4A**). The gyroscopic data may indicate the roll angle $\theta_x$ directly or indirectly. Typically, a gyroscopic sensor may provide measurements indicating roll rate, and the roll angle may be derived from those measurements. For example, some gyroscopes are equipped with a filtering function (e.g., implementing the equations described above) and/or an integration function to acquire a roll angle value from the roll rate measurements.

Yet alternatively or additionally, the roll angle (or another suitable lateral load balance metric) may be determined based on ground distance sensor data indicative of a difference in distance to ground between two laterally spaced points associated with (e.g., at) the considered location. For example, as exemplified by sensors **462a, 462b** in **FIGs. 4A** and **4B,** one or more distance sensor(s) may be configured to measure the respective distance to ground at each of the two laterally spaced points (wherein the respective distances are measured from a corresponding vertical location on the vehicle for both of the laterally spaced points). The distance sensors may be any suitable sensors configured to determine a distance (e.g., sensors performing measurements using radar or lidar technology).

Referring to the examples of **FIGs. 4A** and **4B,** if the distance sensors **462a** and **462b** indicate ground distances $d_a$ **491** and $d_b$ **492,** respectively, the absolute-valued roll angle $\theta_x$ **450** for the location **434** may be determined as $\theta_x = \sin^{-1}(|d_a - d_b|/L)$, which may be approximated to $\theta_x = |d_a - d_b|/L$ for small values of the roll angle, where $L$ represents the distance **490** between the sensors **462a** and **462b.** Here, the resulting roll angle value represents the roll of the chassis (i.e., any effect of non-horizontal ground is not included). It should be noted that this roll angle value may differ from the roll angle value determined based on acceleration or gyroscopic sensor measurements. The latter may be termed Euler roll angle, and generally includes both the roll of the chassis and tilting due to non-horizontal ground. Another suitable lateral load balance metric could be $|d_a - d_b|$.

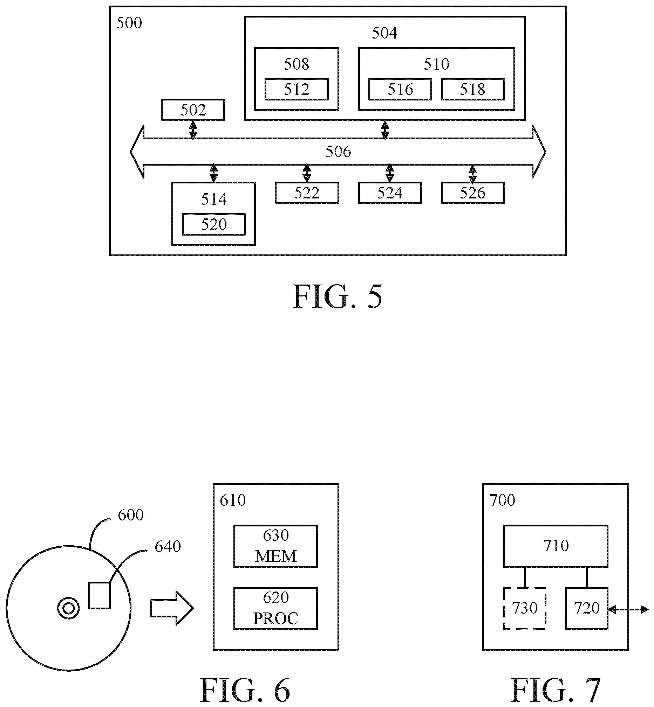

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product exemplified as a non-transitory computer-readable medium in the form of a compact disc (CD) ROM **600.** The computer-readable medium has stored thereon program code **640** comprising instructions. The program code is loadable into processing circuitry (PROC; e.g., a data processing unit) **620,** which may, for example, be comprised in a control unit **610.** When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **100;** e.g., in the form of a VCU **150.** Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit **700** to perform a set of operations, or steps, such as the method discussed in connection to **FIG. 3.**

Consequently, there is disclosed herein a control unit **700** for a heavy-duty vehicle **100,** wherein the control unit is configured to, during the tipping operation: acquire respective lateral load balance metrics for two different locations along the longitudinal dimension of the vehicle; dynamically determine a difference between the respective lateral load balance metrics; and cause a tipping interruptive action to be performed based on an increase rate of the difference

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for controlling an articulated vehicle **100** comprising a tractor **101** and/or one or more towed vehicle units **102,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

A non-exhaustive list of examples:

**Example 1:** A computer system for a vehicle, wherein the vehicle comprises a vehicle body and a vehicle subsystem for load carrying, wherein the vehicle subsystem for load carrying is configured to be increasingly tilted in relation to the vehicle body for load discharge during a tipping operation of the vehicle, the computer system comprising processing circuitry configured to, during the tipping operation: acquire respective lateral load balance metrics for two different locations along the longitudinal dimension of the vehicle; dynamically determine a difference between the respective lateral load balance metrics; and cause a tipping interruptive action to be performed based on an increase rate of the difference.

**Example 2:** The computer system of **Example 1,** wherein the processing circuitry is configured to cause the tipping interruptive action responsive to the increase rate exceeding a threshold value for the increase rate.

**Example 3:** The computer system of any of **Examples 1-2,** wherein the processing circuitry is configured to cause the tipping interruptive action responsive to a weighted combination of the difference and the increase rate exceeding a threshold value for the weighted combination.

**Example 4:** The computer system of any of **Examples 1-3,** wherein the tipping interruptive action comprises issuing a warning message via an operator interface and/or inhibiting the tipping operation.

**Example 5:** The computer system of any of **Examples 1-4,** wherein each of the two different locations is a respective wheel axle location.

**Example 6:** The computer system of **Example 5,** wherein the lateral load balance metric comprises a load disparity between two laterally spaced points along the wheel axle.

**Example 7:** The computer system of any of **Examples 1-6,** wherein the lateral load balance metric for a considered location along the longitudinal dimension of the vehicle comprises a roll angle at the considered location.

**Example 8:** The computer system of any of **Examples 1-7,** wherein the processing circuitry is further configured to determine the lateral load balance metric.

**Example 9:** The computer system of any of **Examples 1-8,** wherein the lateral load balance metric is determined based on one or more of: acceleration data from an acceleration sensor associated with the considered location; gyroscopic data from a gyroscopic sensor associated with the considered location; suspension data indicative of a difference in vertical load between two laterally spaced points associated with the considered location; and ground distance sensor data indicative of a difference in distance to ground between two laterally spaced points associated with the considered location.

**Example 10:** A vehicle comprising a vehicle body and a vehicle subsystem for load carrying, wherein the vehicle subsystem for load carrying is configured to be increasingly tilted in relation to the vehicle body for load discharge during a tipping operation of the vehicle, the vehicle further comprising the computer system of any of **Examples 1-9.**

**Example 11:** A computer-implemented method for a vehicle comprising a vehicle body and a vehicle subsystem for load carrying, wherein the vehicle subsystem for load carrying is configured to be increasingly tilted in relation to the vehicle body for load discharge during a tipping operation of the vehicle, the method comprising, during the tipping operation: acquiring, by processing circuitry of a computer system, respective lateral load balance metrics for two different locations along the longitudinal dimension of the vehicle; dynamically determining, by the processing circuitry, a difference between the respective lateral load balance metrics; and causing, by the processing circuitry, a tipping interruptive action to be performed based on an increase rate of the difference.

**Example 12:** The method of **Example 11,** wherein causing the tipping interruptive action is performed responsive to the increase rate exceeding a threshold value for the increase rate.

**Example 13:** The method of any of **Examples 11-12,** wherein causing the tipping interruptive action is performed responsive to a weighted combination of the difference and the increase rate exceeding a threshold value for the weighted combination.

**Example 14:** The method of any of **Examples 11-13,** wherein the tipping interruptive action comprises issuing a warning message via an operator interface and/or inhibiting the tipping operation.

**Example 15:** The method of any of **Examples 11-14,** wherein each of the two different locations is a respective wheel axle location.

**Example 16:** The method of **Example 15,** wherein the lateral load balance metric comprises a load disparity between two laterally spaced points along the wheel axle.

**Example 17:** The method of any of **Examples 11-16,** wherein the lateral load balance metric for a considered location along the longitudinal dimension of the vehicle comprises a roll angle at the considered location.

**Example 18:** The method of any of **Examples 11-17,** further comprising determining, by the processing circuitry, the lateral load balance metric.

**Example 19:** The method of any of **Examples 11-18,** wherein the lateral load balance metric is determined based on one or more of: acceleration data from an acceleration sensor associated with the considered location; gyroscopic data from a gyroscopic sensor associated with the considered location; suspension data indicative of a difference in vertical load between two laterally spaced points associated with the considered location; and ground distance sensor data indicative of a difference in distance to ground between two laterally spaced points associated with the considered location.

**Example 20:** A computer program product comprising program code for performing, when executed by processing circuitry, the method of any of **Examples 11-19.**

**Example 21:** A non-transitory computer-readable storage medium comprising instructions, which when executed by processing circuitry, cause the processing circuitry to perform the method of any of **Examples 11-19.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system for a vehicle (100, 200), wherein the vehicle comprises a vehicle body (110, 210, 410) and a vehicle subsystem (120, 220, 420) for load carrying, wherein the vehicle subsystem for load carrying is configured to be increasingly tilted in relation to the vehicle body for load discharge during a tipping operation of the vehicle, the computer system (500) comprising processing circuitry (150, 620, 710) configured to, during the tipping operation:

   acquire respective lateral load balance metrics for two different locations (431, 432, 433, 434) along the longitudinal dimension (430) of the vehicle;
   dynamically determine a difference between the respective lateral load balance metrics; and
   cause a tipping interruptive action to be performed based on an increase rate of the difference.

2. The computer system of claim 1, wherein the processing circuitry is configured to cause the tipping interruptive action responsive to the increase rate exceeding a threshold value for the increase rate.

3. The computer system of any of claims 1-2, wherein the processing circuitry is configured to cause the tipping interruptive action responsive to a weighted combination of the difference and the increase rate exceeding a threshold value for the weighted combination.

4. The computer system of any of claims 1-3, wherein the tipping interruptive action comprises issuing (342) a warning message via an operator interface and/or inhibiting (344) the tipping operation.

5. The computer system of any of claims 1-4, wherein each of the two different locations is a respective wheel axle location.

6. The computer system of claim 5, wherein the lateral load balance metric comprises a load disparity between two laterally spaced points (411, 412) along the wheel axle.

7. The computer system of any of claims 1-6, wherein the lateral load balance metric for a considered location along the longitudinal dimension of the vehicle comprises a roll angle (450) at the considered location.

8. The computer system of any of claims 1-7, wherein the processing circuitry is further configured to determine the lateral load balance metric.

9. The computer system of any of claims 1-8, wherein the lateral load balance metric is determined based on one or more of:

   acceleration data from an acceleration sensor (161, 162, 463) associated with the considered location;
   gyroscopic data from a gyroscopic sensor (161, 162, 463) associated with the considered location;
   suspension data indicative of a difference in vertical load between two laterally spaced points (411, 412) associated with the considered location; and
   ground distance sensor data indicative of a difference in distance to ground between two laterally spaced points (462a, 462b) associated with the considered location.

10. A vehicle (100, 200) comprising a vehicle body (110, 210, 410) and a vehicle subsystem (120, 220, 420) for load carrying, wherein the vehicle subsystem for load carrying is configured to be increasingly tilted in relation to the vehicle body for load discharge during a tipping operation of the vehicle, the vehicle further comprising the computer system (500) of any of claims 1-9.

11. A computer-implemented method (300) for a vehicle (100, 200) comprising a vehicle body (110, 210, 410) and a vehicle subsystem (120, 220, 420) for load carrying, wherein the vehicle subsystem for load carrying is configured to be increasingly tilted in relation to the vehicle body for load discharge during a tipping operation of the vehicle, the method comprising, during the tipping operation:

> acquiring (310), by processing circuitry (150, 620, 710) of a computer system (500), respective lateral load balance metrics for two different locations (431, 432, 433, 434) along the longitudinal dimension (430) of the vehicle;
> dynamically determining (320), by the processing circuitry, a difference between the respective lateral load balance metrics; and
> causing (340), by the processing circuitry, a tipping interruptive action to be performed based on an increase rate of the difference.

12. The method of claim 11, wherein causing the tipping interruptive action is performed responsive to the increase rate exceeding (330) a threshold value for the increase rate.

13. The method of any of claims 11-12, wherein causing the tipping interruptive action is performed responsive to a weighted combination of the difference and the increase rate exceeding (330) a threshold value for the weighted combination.

14. A computer program product (600) comprising program code for performing, when executed by processing circuitry (150, 620, 710), the method of any of claims 11-13.

15. A non-transitory computer-readable storage medium (600) comprising instructions, which when executed by processing circuitry (150, 620, 710), cause the processing circuitry to perform the method (300) of any of claims 11-13.

FIG. 1

FIG. 2

**310**
Acquire load balance metrics

**312**
Determine

**314**
Receive

↓

**320**
Determine difference

↓

**330**
func(rate)
> thr?

no →

↓ yes

**340**
Cause interruptive action

**342**
Warn

**344**
Inhibit

**300**

## FIG. 3

430

400

431

463

433

432

434

462a   490   462b

## FIG. 4A

400'

420

450

440

462a

410

462b

491   492

411   412

## FIG. 4B

FIG. 5

FIG. 6

FIG. 7

Europäisches
Patentamt

European
Patent Office

Office européen
des brevets

# EUROPEAN SEARCH REPORT

**Application Number**

EP 23 21 1705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 046 957 A (EDBRO HOLDINGS) 19 November 1980 (1980-11-19) | 1-5,7-15 | INV. B60P1/04 |
| Y | * page 2, line 56 – page 4, line 48; figures 1-5 * ----- | 6 | |
| Y | DE 20 2013 101202 U1 (AMF FAHRZEUGBAU GMBH [DE]) 27 March 2013 (2013-03-27) * figures 1-5 * ----- | 6 | |
| A | SE 2 351 271 A1 (VOLVO TRUCK CORP [SE]) 6 November 2023 (2023-11-06) * paragraph [0011] – paragraph [0023]; figures 1,2 * ----- | 1-15 | |
| A | JP 7 245723 B2 (KAMEYAMA KENJI) 24 March 2023 (2023-03-24) * paragraph [0013] – paragraph [0044]; figures 1,4,7-9 * ----- | 1-15 | |

| | TECHNICAL FIELDS SEARCHED (IPC) |
|---|---|
| | B60P |

The present search report has been drawn up for all claims

| Place of search | Date of completion of the search | Examiner |
|---|---|---|
| The Hague | 1 March 2024 | Heemskerk, Laurens |

EPO FORM 1503 03.82 (P04C01)

## ANNEX TO THE EUROPEAN SEARCH REPORT
## ON EUROPEAN PATENT APPLICATION NO.

**EP 23 21 1705**

This annex lists the patent family members relating to the patent documents cited in the above-mentioned European search report.
The members are as contained in the European Patent Office EDP file on
The European Patent Office is in no way liable for these particulars which are merely given for the purpose of information.

**01-03-2024**

| Patent document cited in search report | | Publication date | Patent family member(s) | | Publication date |
|---|---|---|---|---|---|
| GB 2046957 | A | 19-11-1980 | NONE | | |
| DE 202013101202 | U1 | 27-03-2013 | NONE | | |
| SE 2351271 | A1 | 06-11-2023 | NONE | | |
| JP 7245723 | B2 | 24-03-2023 | JP 7245723 | B2 | 24-03-2023 |
| | | | JP 2020199797 | A | 17-12-2020 |